# FASCICULE DE BREVET EUROPEEN

(11) **EP 2 499 370 B1**
(45) Date de publication et mention de la délivrance du brevet: **22.01.2014**
(21) Numéro de dépôt: 10792981.2
(22) Date de dépôt: 08.11.2010
(51) Int. Cl.: F04B 49/00, A61M 5/48

(54) **DISPOSITIF POUR SURVEILLER UN PRÉLÈVEMENT À L'AIDE D'UNE POMPE À PISTON.**
VORRICHTUNG ZUR ÜBERWACHUNG VON PROBENENTNAHME MIT EINER KOLBENPUMPE
DEVICE FOR MONITORING SAMPLE-COLLECTION USING A PISTON PUMP

(30) Priorité: 13.11.2009 FR 0957999
(43) Date de publication de la demande: 19.09.2012
(73) Titulaire: Pulssar Technologies, 75012 Paris (FR)
(72) Inventeur: ABOUSALEH, Khaled, F-75011 Paris (FR)
(74) Mandataire: Mazabraud, Xavier
(86) Numéro de dépôt international: PCT/FR2010/052395
(87) Numéro de publication internationale: WO 2011/058268

(56) Documents cités:
- EP-A1- 0 316 763
- WO-A1-2009/024562
- FR-A1- 2 862 387
- US-A- 4 624 659
- US-A1- 2003 225 371

## Description

La présente invention se rapporte au domaine des prélèvements automatiques effectués à l'aide d'une pompe à piston, notamment une pompe du type seringue. La présente invention se rapporte particulièrement aux prélèvements d'un échantillon par un automate d'analyse, notamment d'un échantillon sanguin.

Notamment dans les automates d'analyse sanguine, un échantillon est prélevé dans un tube, en vue de son analyse. L'automate comprend une aiguille, prévue pour plonger dans le tube afin d'y recueillir l'échantillon, et une pompe. La pompe comprend généralement une chambre de travail, reliée à l'aiguille par un système de canalisation adapté. On fait varier le volume de la chambre selon que l'on veut aspirer ou refouler l'échantillon prélevé dans le tube. Généralement, l'échantillon prélevé reste contenu dans l'aiguille, voire dans une partie du système de canalisation voisin de l'aiguille. Un piston fluide, généralement liquide est contenu dans la chambre et le système de canalisation, au-delà de l'échantillon. La variation du volume de la chambre, comme dans une seringue, est généralement assurée par le déplacement d'un plongeur monté coulissant dans la chambre. Le volume de la chambre est alors fonction de la position du piston.

Il est particulièrement important, notamment si l'on veut doser des éléments contenus dans l'échantillon, de s'assurer des volumes prélevés, aspirés et refoulés. Il en va de même pour les réactifs, qui peuvent être aspirés ou refoulés par des moyens de pompage identiques. La vérification des volumes est généralement assurée par des capteurs de position du plongeur et/ou des pas d'un moteur pas à pas qui entraine ce plongeur. Cependant, plusieurs situations peuvent conduire à une erreur de prélèvement.

Dans un premier exemple, de la mousse peut se former à la surface du sang dans le tube, ou l'aiguille ne pas plonger dans le sang. Ainsi, au cours du prélèvement, on va prélever de l'air au lieu du sang prévu, alors que le plongeur s'est déplacé de la distance prévue.

Dans un deuxième exemple, un caillot peut se former dans l'aiguille ou le système de conduite, de sorte qu'aucun prélèvement ne peut se faire. Pourtant, notamment si le piston fluide est constitué d'air, cet air va se dilater et autoriser le déplacement du plongeur sur la distance prévue.

Dans ces deux exemples, la seule vérification du déplacement du plongeur laisse penser que le prélèvement a été correctement effectué, alors qu'il n'en est rien. En outre, le prélèvement peut s'effectuer correctement durant une partie du déplacement du plongeur, puis s'interrompre, par exemple lorsque le niveau du sang dans le tube devient inférieur à celui de l'aiguille, de sorte que celle-ci ne plonge plus dans le sang à prélever.

Il en va de même pour l'aspiration ou le refoulement d'un liquide quelconque.

Le document WO 2009/024562 décrit des dispositifs de pompage comprenant un capteur de pression, qui permet d'obtenir une mesure de la pression significative du volume de la chambre de travail. Le préambule de la revendication indépendante 1 est basé sur ledit document.

L'invention a pour but de proposer un dispositif de pompage permettant de s'assurer qu'un liquide prévu pour être aspiré ou refoulé à l'aide d'un tel dispositif, l'est effectivement.

Selon l'invention, un tel dispositif de pompage permettant de s'assurer que l'on pompe, notamment que l'on aspire et/ou refoule, un liquide, comprend un capteur de pression disposé dans un circuit de pompage du dispositif. Le circuit de pompage comprend une chambre de travail dont le volume varie au cours du pompage, le capteur de pression étant disposé dans la chambre et formant une paroi d'extrémité de ladite chambre.

Ainsi, lors d'une aspiration, si la pression instantanée mesurée est supérieure à un premier seuil prévisible, on peut considérer que l'on aspire au moins une partie d'air. Si au contraire la pression est inférieure à un deuxième seuil normalement prévisible, on peut considérer qu'il y a un bouchon qui gêne l'aspiration.

De même, lors d'un refoulement, si la pression instantanée mesurée est inférieure à un troisième seuil prévisible, on peut considérer que l'on refoule au moins une partie d'air. Si au contraire la pression est supérieure à un quatrième seuil normalement prévisible, on peut considérer qu'il y a un bouchon qui gêne le refoulement.

Le dispositif comprend un orifice d'aspiration et/ou de refoulement et le capteur est disposé au voisinage dudit orifice, sensiblement tangent à ladite paroi d'extrémité. Ainsi, le dispositif est plus sensible à un disfonctionnement du pompage résultant d'un défaut d'aspiration ou de refoulement au travers du circuit de pompage.

Dans un mode de réalisation particulier, le système de pompage peut comprendre une pompe du type seringue, c'est-à-dire que la chambre de travail est cylindrique et qu'il comprend un plongeur monté coulissant avec étanchéité dans la chambre, de sorte que le volume de la chambre varie en fonction de la position du plongeur dans la chambre, la prise de pression ou le capteur de pression étant disposé à une extrémité de la chambre opposée au plongeur. Un capteur adapté à un tel dispositif peut comprendre une membrane qui forme une paroi d'extrémité de la chambre.

Le dispositif peut avantageusement comprendre des moyens de contrôle pour comparer une pression instantanée mesurée par le capteur avec des conditions normales de pression.

L'invention concerne aussi sur un automate d'analyse, notamment un automate d'analyse sanguine, comprenant un dispositif selon l'invention.

Plusieurs modes d'exécution de l'invention seront décrits ci-après, à titre d'exemples non limitatifs, en référence aux dessins annexés dans lesquels :
- la figure 1 est une vue en coupe d'un bloc de pompage pour un automate d'analyse sanguine ;
- la figure 2 est une vue d'une coupe d'un corps pour un capteur de pression équipant le bloc de la figure 1, et une demi-coupe à gauche du bloc au voisinage du corps ; et,
- la figure 3 est une courbe illustrant une pression prévisible en fonction du volume aspiré.

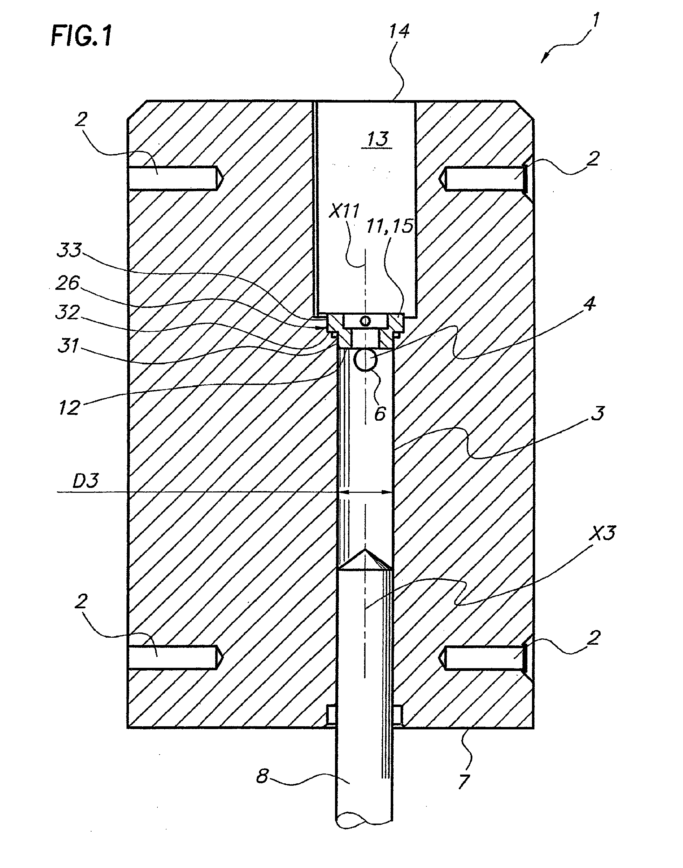

La figure 1 illustre une coupe d'un bloc de pompage 1 prévu pour être monté dans un automate d'analyse sanguine. Le bloc 1 est de forme sensiblement parallélépipédique. Il comprend des alésages 2 prévus pour le montage du bloc 1 dans l'automate ou son assemblage avec d'autres blocs voisins. Une portion 3, 4, 6 d'un circuit de pompage de l'automate est formé dans le bloc 1. Cette portion de circuit comprend une chambre de travail 3 et une conduite 4 débouchant par un orifice 6 dans la chambre 3 au voisinage d'une première extrémité de celle-ci. La conduite 4 est utilisée à la fois pour l'aspiration et pour le refoulement.

La chambre de travail 3 a sensiblement la forme d'un cylindre de révolution autour d'un axe X3 du plan de coupe de la figure 1. La chambre 3 est ouverte par une deuxième extrémité, opposée à la première, au travers et perpendiculairement à une première face 7 du bloc 1. Le bloc 1 comprend en outre un plongeur 8 complémentaire à la chambre 3 et monté coulissant dans celle-ci. Le plongeur 8 pénètre la chambre 3 au travers de son ouverture dans la face 7. Le plongeur 8 est monté étanche avec la chambre 3. Le plongeur est mu en translation par un moteur pas à pas, non illustré aux figures.

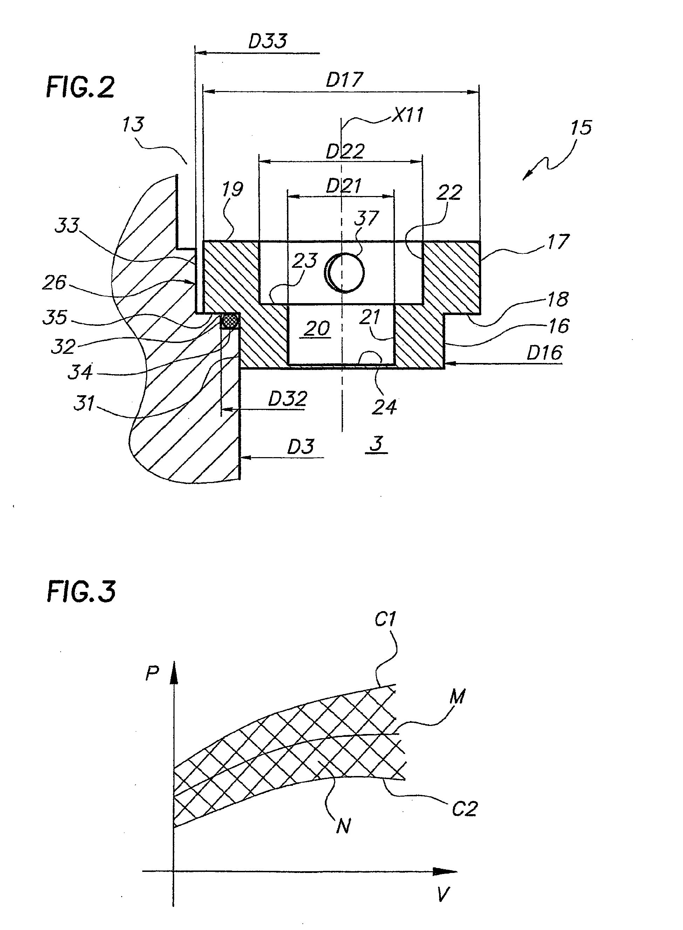

La première extrémité de la chambre 3 est fermée par un capteur de pression 11 qui forme une paroi 12 de la chambre 3. La paroi d'extrémité 12 s'étend sur toute la dimension transversale de la chambre 3, perpendiculairement à l'axe X. Le capteur 11 comprend un corps 15 qui est particulièrement représenté à figure 2, plus précisément et à une échelle supérieure.

La conduite 6 s'étend radialement depuis la chambre 3 en direction d'une face cachée du bloc 1, opposée à l'observateur de la figure 1. L'orifice 6 est sensiblement tangent à la paroi d'extrémité 12. Ainsi, au voisinage immédiat de la conduite, le capteur est sensible à la moindre modification de pression due à une altération de l'écoulement dans la conduite 4 ou au-delà, par exemple si de l'air est aspiré ou si un bouchon se forme dans le circuit de pompage. Au-delà de la conduite 6, le circuit de pompage aboutit à une aiguille (non représentée aux figures) prévue pour prélever un échantillon de sang dans un tube adapté qui contient du sang à analyser.

Le bloc 1 comprend en outre une cavité de montage 13 qui débouche au travers d'une deuxième face 14 du bloc 1, opposée à la première face 7. La cavité 13 est prévue pour permettre le montage du capteur 11 au travers de la deuxième face 14 du bloc 1.

La cavité de montage 13 et la chambre de travail 3 forment entre elles un logement 26 pour le capteur 11. Le logement est de révolution autour de l'axe X3 de la chambre 3. Selon que l'on va de la chambre 3 à la cavité 13, le logement comprend 3 zones cylindriques 31-33 successivement plus larges chacune séparée de la suivante par un épaulement annulaire 34,35. La première zone cylindrique 33 prolonge à diamètre D3 constant la chambre de travail 3. Le diamètre D32 de la deuxième zone 32 et le diamètre D33 de la troisième zone 33 sont tels que D33 > D32 > D31. Les épaulements annulaires 34,35 sont perpendiculaires à l'axe X3.

On va maintenant décrire le corps 15 en référence à la figure 2.

Le corps 15 est de forme sensiblement de révolution autour d'un axe X11, prévu pour se confondre avec l'axe X3 de la chambre, lorsque le capteur 11 est monté dans le bloc 1.

Le corps 15 est extérieurement défini par une face antérieure 12 pleine, deux surfaces latérales cylindriques 16,17 formant entre elles un épaulement annulaire 18, et une surface postérieure 19 annulaire.

Le corps 15 comprend un volume intérieur 20 défini par deux surfaces intérieures cylindriques 21,22 formant entre elles un épaulement annulaire 23.

Les épaulements et les faces antérieure et postérieure sont dans des plans respectifs perpendiculaires à l'axe X11.

Le corps 15 comprend en outre un canal de mesure 37 qui débouche dans le volume intérieur 20, et destiné à le mettre en communication avec un instrument (non représenté aux figures) pour la mesure de la pression dans le volume 20.

La face antérieure 12 est prévue pour former la paroi d'extrémité 12 de la chambre de travail 3. La face antérieure 12 est essentiellement constituée par une membrane 24 déformable en fonction de la différence de pression entre la chambre de travail 3 et le volume intérieur 20 du corps 15 du capteur 11. L'utilisation d'une telle membrane 24 est particulièrement avantageuse. En effet, compte tenu de sa faible dimension et de son faible déplacement, la membrane 24 permet de mesurer la pression dans la chambre 3 sans en modifier le volume, donc sans influer sur le volume prélevé et/ou distribué, contrairement à d'autres solutions qui détectent la variation de diamètre d'un tuyau souple, autres solutions pour lesquelles la variation de volume est importante et intervient notablement sur le volume réellement prélevé et/ou distribué.

Une première surface latérale 16 parmi des surfaces latérale 16,17 a un diamètre D16 inférieur au diamètre D17 de la deuxième surface 17. Le diamètre D16 est sensiblement égal au diamètre D3 de la chambre 3, de sorte que la première surface latérale 16 vient s'emboiter en s'ajustant dans la première zone 31 du logement 26. Le diamètre D17 de la deuxième surface extérieure 17 est supérieur au diamètre D32 de la deuxième zone 32 du logement 26 ; il est aussi inférieur au diamètre D33 de la troisième zone 33 du même logement 26. Ainsi, lorsque le capteur 11 est monté dans le bloc 1, c'est-à-dire que le corps est dans la position illustrée aux figures 1 et 2, l'épaulement 18 du corps est en appui contre le deuxième épaulement 35 du logement 25, définissant ainsi la position de la paroi 12 de la chambre 3. Dans la deuxième zone 32 du logement 26, un espace annulaire est défini entre le premier épaulement 34 et l'épaulement extérieur 18 du corps 15 dans lequel un joint torique est monté, comprimé entre ces deux épaulements, de sorte qu'il assure l'étanchéité de la chambre de travail 3.

D'autres éléments du capteur 11 ne sont ni décrits ni illustrés.

La figure 3 illustre une courbe de la pression P, mesurée par le capteur 11, en fonction du volume V de la chambre 3 à un instant donné, en cours de d'aspiration. Un volume V correspond à une position instantanée donnée du plongeur 8 dans la chambre 3. Cette courbe est purement illustrative, elle varie notamment en fonction des dimensions de la chambre de la vitesse du piston dans la chambre et de la viscosité du fluide à prélever.

Une zone hachurée N, limitée par une courbe supérieure C1 et une courbe inférieure C2, autour d'une cour théorique moyenne M. Cette zone N représente des conditions normales de fonctionnement, lorsque l'on aspire un échantillon sanguin. Cette zone peut avantageusement être déterminée expérimentalement et être enregistrée par des moyens d'apprentissage intégrés à l'automate.

Si en cours d'aspiration, pour un volume donné V, la pression instantanée P est inférieure à la courbe C2, ou supérieure à la courbe C1, le prélèvement de l'échantillon doit être considéré comme nul et recommencé. Un nettoyage préalable du circuit de pompage peut être nécessaire, si un bouchon s'y est formé. Il peut être nécessaire de repositionner le tube contenant l'échantillon à prélever, de sorte que l'aiguille de prélèvement s'y trouve suffisamment plongée afin de ne pas aspirer d'air.

A titre d'exemple, un tel dispositif peut notamment avoir les dimensions suivantes :
D3 #D16 = 6 mm
D17=8mm

Bien sûr, l'invention n'est pas limitée aux exemples qui viennent d'être décrits.

Ainsi, la pompe peut être d'un autre type que du type seringue c'est-à-dire comportant un piston coulissant dans une chambre cylindrique, tel qu'illustré aux figures.

De même le dispositif peut ne pas être sous la forme d'un bloc, mais comprendre des éléments individualisables. En outre un dispositif selon l'invention peut avantageusement comprendre des moyens de contrôle, par exemple un processeur, et des moyens de mémoire, pour effectuer notamment tout ou partie des fonctions suivantes :
- constitution par apprentissage base de données illustrant des conditions de pression normales ou anormales de pression en cour de pompage ;
- enregistrement et stockage d'une telle base de données ;
- comparaison instantanée des pressions de pompage avec les données de la base ;
- Avertissement en cas de valeurs de pression instantanée anormales.

## Revendications

1. Dispositif de pompage (1) pour automate d'analyse, permettant de s'assurer que l'on pompe, notamment que l'on aspire et/ou refoule, un liquide, comprenant une chambre de travail (3) dont le volume varie au cours du pompage, et un capteur de pression (11) disposé dans ladite chambre (3), ledit capteur comprenant une membrane (24) qui forme une paroi d'extrémité (12) de ladite chambre,
**caractérisé en ce qu'**il comprend en outre une conduite (4) qui s'étend radialement depuis la chambre (3) et qui débouche par un orifice (6) d'aspiration et/ou de refoulement dans ladite chambre, l'orifice (6) étant sensiblement tangent à ladite paroi d'extrémité.

2. Dispositif selon la revendication 1, **caractérisé en ce que** la chambre de travail est cylindrique, et **en ce qu'**il comprend un plongeur (8) monté coulissant avec étanchéité dans ladite chambre (3), de sorte que le volume de ladite chambre varie en fonction de la position dudit plongeur dans ladite chambre, ladite prise de pression (11) étant disposée à une extrémité de ladite chambre opposée au plongeur.

3. Dispositif selon l'une des revendications 1 ou 2, **caractérisé en ce qu'**il comprend des moyens de contrôle pour comparer une pression instantanée mesurée par le capteur avec des conditions normales de pression.

4. Automate d'analyse, notamment d'analyse sanguine, **caractérisé en ce qu'**il comprend un dispositif selon l'une des revendications 1 à 3.

## Patentansprüche

1. Pumpvorrichtung (1) für Analyseautomat, durch den sich insbesondere sicherstellen lässt, dass eine Flüssigkeit angesaugt und/oder zurückgeführt wird, umfassend eine Arbeitskammer (3), deren Volumen im Verlauf des Pumpens variiert, und einen Drucksensor (11), der in der Kammer (3) angeordnet ist, wobei der Sensor eine Membran (24) umfasst, die eine Außenwand (12) der Kammer bildet,
**dadurch gekennzeichnet, dass** sie weiterhin eine Leitung (4) umfasst, die sich radial von der Kammer (3) aus erstreckt und die in eine Ansaug- und/oder Rückführöffnung (6) in der Kammer einmündet, wobei die Öffnung (6) im Wesentlichen tangential zur Außenwand ist.

2. Vorrichtung nach Anspruch 1, **dadurch gekennzeichnet, dass** die Arbeitskammer zylindrisch ist, und dadurch, dass sie einen Kolben (8) umfasst, der dicht verschiebbar in der Kammer (3) montiert ist, derart, dass das Volumen der Kammer in Funktion der Position des Kolbens in der Kammer variiert, wobei das Druckmessgerät (11) an einem Ende der Kammer gegenüber des Kolbens angeordnet ist.

3. Vorrichtung nach einem der Ansprüche 1 oder 2, **dadurch gekennzeichnet, dass** sie Steuerungsmittel umfasst, um einen aktuellen, vom Sensor gemessenen Druck mit den normalen Druckbedingungen zu vergleichen.

4. Analysegerät, insbesondere zur Blutanalyse, **dadurch gekennzeichnet, dass** es eine Vorrichtung nach einem der Ansprüche 1 bis 3 umfasst.

## Claims

1. A pumping device (1) for an automated analysis system, with which it is possible to ensure that a liquid is pumped, notably sucked up and/or discharged, comprising a working chamber (3), the volume of which varies during pumping, and a pressure tap (11) positioned in said chamber (3), said tap comprising a membrane (24) which forms an end wall (12) of said chamber,
**characterised in that** it further comprising a conduit (4) which extends radially from the chamber (3) and opening through a suction and/or discharge orifice (6), the orifice (6) being substantially tangent to the said end wall.

2. The device according to claim 1, **characterized in that** the working chamber is cylindrical, and **in that** it comprises a slidably and sealably mounted plunger (8) in said chamber (3), so that the volume of said chamber varies according to the position of said plunger in said chamber, said pressure tap (11) being positioned at one end of said chamber, opposite to the plunger.

3. The device according to one of claims 1 or 2, **characterized in that** it comprises monitoring means for comparing and instantaneous pressure measured by the sensor with normal pressure conditions.

4. An automated analysis system, notably for blood analysis, **characterized in that** it comprises a device according to one of claims 1 to 3.
